Europäisches Patentamt

European Patent Office

Office européen des brevets

(11) Numéro de publication: **0 279 997 B1**

# FASCICULE DE BREVET EUROPEEN

(45) Date de publication de fascicule du brevet: **27.04.94**

(51) Int. Cl.⁵: **H04B 7/10,** H04B 14/00, G01S 7/02

(21) Numéro de dépôt: **87402954.9**

(22) Date de dépôt: **22.12.87**

(54) **Dispositif et procédé de transmission de données utilisant deux polarisations croisées d'une onde électromagnétique.**

(30) Priorité: **30.12.86 FR 8618352**

(43) Date de publication de la demande:
**31.08.88 Bulletin 88/35**

(45) Mention de la délivrance du brevet:
**27.04.94 Bulletin 94/17**

(84) Etats contractants désignés:
**DE FR GB IT NL SE**

(56) Documents cités:
**EP-A- 0 085 614**
**GB-A- 542 693**
**GB-A- 2 095 492**
**US-A- 3 234 547**
**US-A- 3 311 829**

(73) Titulaire: **THOMSON-CSF**
**173, Boulevard Haussmann**
**F-75008 Paris(FR)**

(72) Inventeur: **Drabowitch, Serge**
**THOMSON-CSF**
**SCPI**
**19, avenue de Messine**
**F-75008 Paris(FR)**
Inventeur: **Fouche, Yvon**
**THOMSON-CSF**
**SCPI**
**19, avenue de Messine**
**F-75008 Paris(FR)**

(74) Mandataire: **Benoit, Monique et al**
**THOMSON-CSF**
**SCPI**
**B.P. 329**
**50, rue Jean-Pierre Timbaud**
**F-92402 Courbevoie Cédex (FR)**

EP 0 279 997 B1

## Description

L'invention a principalement pour objet un dispositif et un procédé de transmission et/ou d'acquisition des données utilisant deux polarisations croisées d'une onde électromagnétique et un dispositif d'enregistrement magnétique.

Le dispositif objet de la présente invention comporte deux émetteurs connectés à deux antennes susceptibles d'émettre un rayonnement dans deux polarisations croisées. Chaque émetteur utilise une modulation de phase. A la réception, on effectue la somme vectorielle des signaux émis par chaque émetteur. Ainsi, il est par exemple possible d'utiliser des émetteurs travaillant en classe C c'est-à-dire saturés, modulés en phase, pour obtenir, à la réception, une modulation amplitude-phase.

L'utilisation d'émetteurs en classe C permet d'obtenir d'excellents rendements énergétiques ainsi qu'une très bonne linéarité de phase.

L'utilisation de deux modulations indépendantes, permet soit d'augmenter le débit de transmission, soit de diminuer la résolution nécessaire au fonctionnement du dispositif selon la présente invention.

Les débits importants d'information sont rendus possibles par un accrochage, à la réception, d'amplitude et de phase.

On connaît d'après le document EP-A-085614 un système de transmission de données à deux canaux de transmission, mais les deux signaux modulants modulent de façon identique deux porteuses, et à la réception, les deux canaux sont démodulés séparément.

Selon l'invention, le procédé de transmission sur deux canaux de données, les données provenant d'au moins une source, étant envoyées en parallèle sur les deux canaux et étant modulées en phase dans les deux canaux différents, selon deux modulations de phase indépendantes, les signaux ainsi modulés étant respectivement rayonnés par une première antenne ayant une première polarisation, et par une deuxième antenne ayant une polarisation différente, les signaux ainsi modulés étant reçus par des antennes de polarisations correspondantes est caractérisé par la fait que les signaux reçus sont additionnés vectoriellement ensemble, le signal résultant étant démodulé en amplitude et en phase.

Selon l'invention, le dispositif de transmission sur deux canaux de données, les données provenant d'au moins une source, et étant envoyées en parallèle sur les deux canaux, dispositif dont l'émetteur comporte deux antennes à polarisations différentes et dont le ou les récepteurs comportent deux antennes correspondantes à polarisations différentes, l'émetteur comportant un modulateur modulant les données selon deux modulations de phase indépendantes, chacun de ces signaux modulés en phase étant envoyé à l'une des antennes, et est caractérisé par le fait que le ou les récepteurs comportent un sommateur relié aux deux antennes de réception, ce sommateur étant relié à un canal unique de démodulation de phase et d'amplitude.

L'invention sera mieux comprise au moyen de la description ci-après des figures annexées données comme des exemples non limitatifs parmi lesquels :
- la figure 1 est un schéma illustrant le principe de fonctionnement du dispositif selon la présente invention ;
- la figure 2 est un schéma illustrant un premier exemple de réalisation d'un dispositif d'émission selon la présente invention ;
- la figure 3 est un schéma illustrant un second exemple de réalisation d'un dispositif d'émission selon la présente invention ;
- la figure 4 est le schéma d'un premier exemple de réalisation d'un dispositif de réception selon la présente invention ;
- la figure 5 est le schéma d'un deuxième exemple de réalisation d'un dispositif de réception selon la présente invention ;
- la figure 6 est un schéma d'un exemple de réalisation d'un détail des dispositifs des figures 2 et 3 ;
- la figure 7 est un troisième exemple de réalisation d'un dispositif d'émission selon la présente invention ;
- la figure 8 est un schéma d'un exemple de réalisation d'un radar selon la présente invention ;
- la figure 9 est un schéma d un second exemple de réalisation d'un radar selon la présente invention ;
- la figure 10 est un schéma illustrant un exemple de transmission numérique ;
- la figure 11 est un schéma illustrant un exemple de transmission numérique ;
- la figure 12 est un schéma illustrant un exemple de transmission numérique ;
- la figure 13 est un schéma illustrant une première application du dispositif selon la présente invention ;
- la figure 14 est un schéma illustrant une seconde application du dispositif selon la présente invention ;
- la figure 15 est un schéma illustrant le principe de fonctionnement du dispositif de la figure 7 ;

2

- la figure 16 est un schéma illustrant un enregistreur magnétique selon la présente invention ;

__ la figure 17 est un schéma d'une variante de réalisation du dispositif selon la présente invention ;

- la figure 18 est un schéma d'un détail de la figure 17.

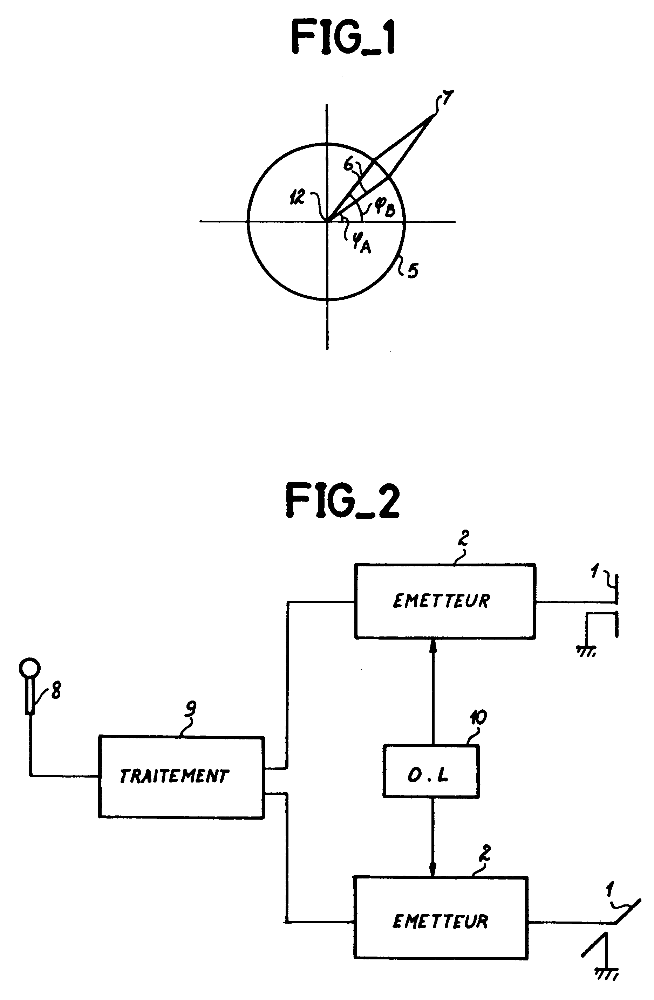

Sur les figures 1 à 18 on a utilisé les mêmes références pour désigner les mêmes éléments.

Sur la figure 1, on peut voir le principe du dispositif selon la présente invention. La figure 1 illustre l'exemple de l'utilisation de deux émetteurs de même puissance. Sur la figure 1, on a représenté en coordonnée polaire les signaux 6 susceptibles d'être émis par deux émetteurs. Le module représente l'amplitude du signal émis, l'angle la phase. Le cercle 5 représente l'amplitude des émetteurs utilisés. Un premier signal 6 correspond à une phase $\phi A$, le second signal 6 correspond à une phase $\phi B$. Le signal résultant 7 est obtenu, à la réception, par addition vectorielle des signaux 6 issus des deux émetteurs.

Ainsi, on peut voir, que la modulation appropriée des phases $\phi A$ et $\phi B$ des deux émetteurs permet d'obtenir un signal 7 modulé en amplitude et en phase.

Avantageusement, on utilise le procédé et le dispositif selon la présente invention pour obtenir des transmissions numériques des données.

Sur la figure 2, on peut voir un exemple de réalisation d'un dispositif d'émission selon la présente invention.

Le dispositif comporte au moins une source 8 de signal à transmettre, par exemple un microphone. La source de signal 8 est connectée à un dispositif de traitement 9. Le dispositif de traitement 9 convertit le signal reçu en signaux de commande d'émetteurs 2, (ou de dispositifs de modulation de phase non représentée sur la figure 2), permettant d'obtenir les phases nécessaires à la génération d'un signal qui est fonction du signal à transmettre. Le dispositif de traitement est connecté à au moins deux émetteurs 2.

Avantageusement, un oscillateur local 10 est connecté aux émetteurs 2 permettant une augmentation de fréquence. Il est possible d'utiliser plusieurs étages (non représentés) pour augmenter la fréquence.

Les émetteurs 2 sont connectés à deux antennes d'émission 1 travaillant dans des polarisations sensiblement orthogonales. Les antennes d'émission 1 sont par exemple des monopôles ou des dipôles.

Avantageusement, les monopôles ou les dipôles 1 sont placés au foyer d'un réflecteur ou d'une antenne Cassegrain. Les sorties des émetteurs 2 sont connectées à deux antennes d'émission 1 susceptibles d'émettre des ondes électromagnétiques en polarisations croisées.

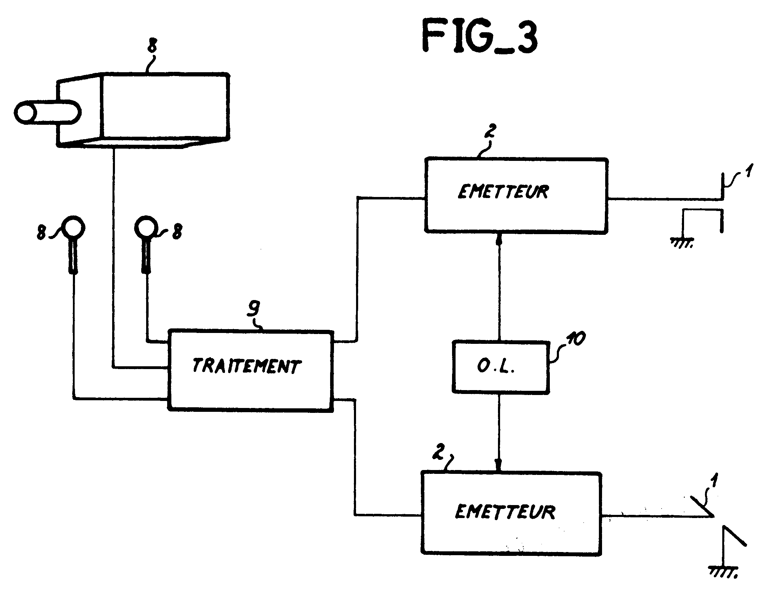

Sur la figure 3, on peut voir un émetteur d'émissions de télévision selon la présente invention. Dans l'exemple illustré sur la figure 3 on utilise comme source de signal 8 une caméra vidéo, et deux microphones. Il est possible d'utiliser une régie, qui délivre en sortie, par exemple deux voies son et une voie vidéo l'entrée de la régie étant constitué par exemple par des caméras, des microphones, des générateurs de caractères alphanumériques et des magnétoscopes. Les sources de signal 8 sont connectées à un dispositif de traitement 9. Le dispositif de traitement 9 est connecté à deux émetteurs 2. D'autre part, un oscillateur local 10 est connecté aux émetteurs 2.

L'utilisation d'un canal de transmission à haut débit permet de réaliser des émissions de télévision en haute définition. L'augmentation du débit de transmission du canal est obtenue, par exemple, par l'émission par les antennes 1 de deux modulations indépendantes, qui permettent d'obtenir à la réception la modulation d'amplitude et la modulation de phase.

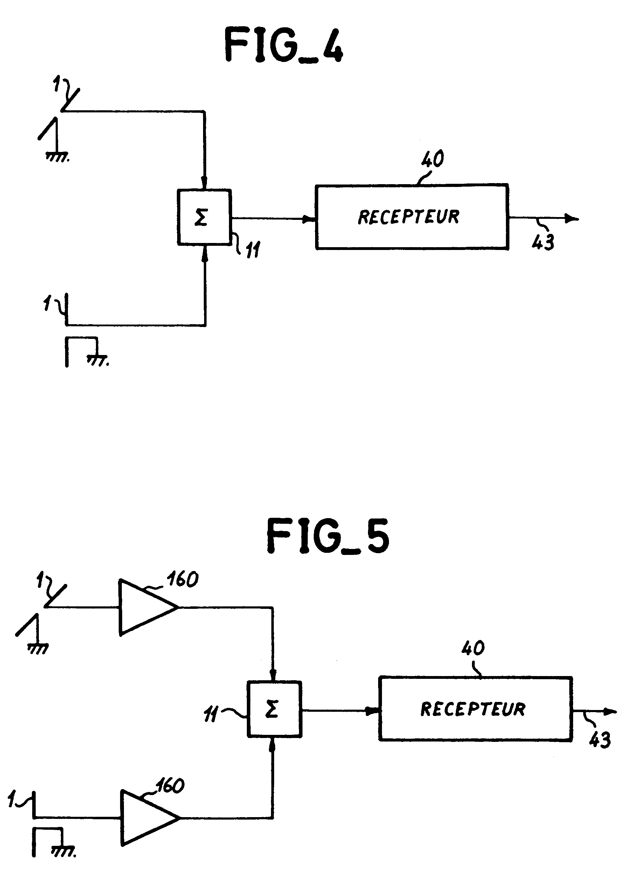

Sur la figure 4, on peut voir un exemple de réalisation d'un dispositif de réception selon la présente invention. Le dispositif comporte deux antennes 1 susceptibles de recevoir des ondes électromagnétiques en polarisations croisées. Les deux antennes 1 sont connectées à un dispositif de sommation 11. Le dispositif de sommation 11 est par exemple un anneau hybride ou un Té magique. Par exemple deux branches du Té magique sont reliées aux antennes 1, une branche est reliée à un récepteur 40, la quatrième branche étant reliée par exemple à une charge adaptée. A la sortie du récepteur 40 nous disposons d'un signal 43 modulé en amplitude et en phase.

Avantageusement, on procède à la réception à la réduction des fréquences du signal reçu. Les dispositifs de réduction des fréquences ne sont pas représentés sur la figure 4.

La charge adaptée connectée au dispositif de sommation 11 absorbe en moyenne la moitié de l'énergie captée par les antennes 1. Toutefois, cette perte de 3 dB est moins grave à la réception où les puissances mises en jeu sont plus faibles qu'elles ne le seraient à l'émission.

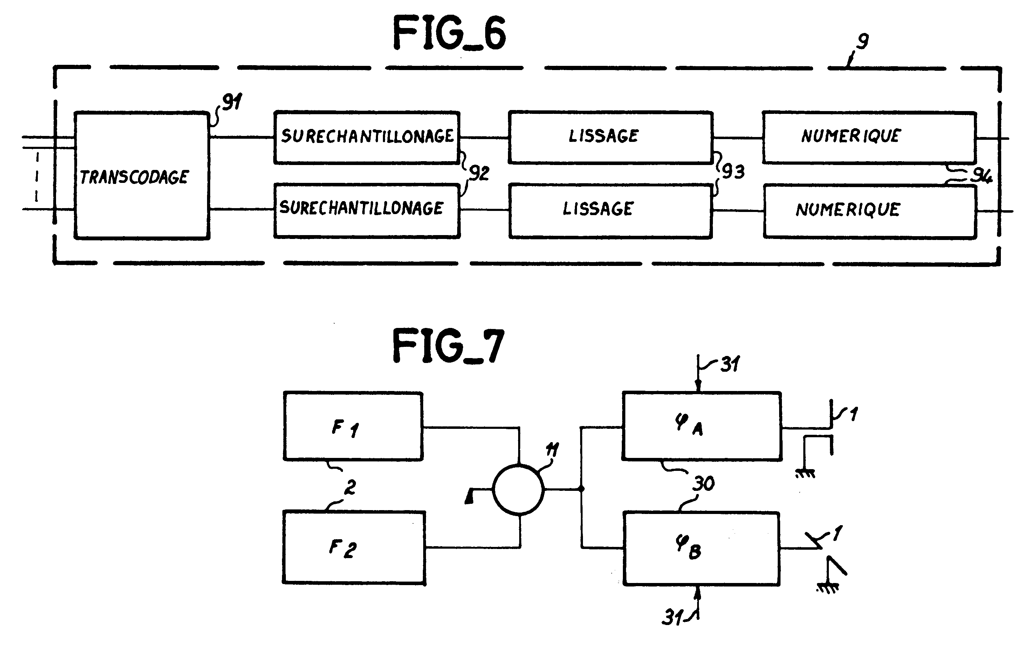

Sur la figure 5, on peut voir un exemple de réalisation d'un dispositif de réception selon la présente invention particulièrement avantageux car présentant un excellent rapport signal/bruit.

Le dispositif de réception de la figure 5 comporte deux antennes de réception 1 susceptibles de travailler en polarisations croisées connectées par intermédiaire d'amplificateurs d'antennes 160 à un dispositif de sommation 11. Le dispositif de sommation 11 est relié à un récepteur 40. A la sortie du récepteur 40 on dispose d'un signal modulé en amplitude et en phase 43.

L'utilisation d'amplificateurs d'antennes 160 permet un gain de rapport signal/bruit de 3 db. En effet la combinaison des signaux n'est effectuée qu'après amplification. Ainsi, les pertes d'énergie dans les dispositifs de sommation 11, correspondant à l'énergie absorbée par la charge adaptée ne diminue pas le rapport signal/bruit.

Sur la figure 6, on peut voir un dispositif de traitement 9 permettant de répartir N sources de signal 8 (non illustrées sur la figure 6) sur deux émetteurs 2 (non illustrés sur la figure 6).

Le dispositif 9 comporte un dispositif de transcodage 91. Le dispositif de transcodage 91 permet de fournir aux émetteurs 2 les signaux nécessaires à l'émission. Par exemple; dans le cas d'une source de signal 8 unique et de deux émetteurs 2 on transmet un signal utile complexe $x(t) = \rho(t) \cdot e^{j\phi(t)}$ modulé en BLU autour d'une fréquence $f_0$.

Les signaux émis e(t) sont donnés par la formule :

$$e(t) = \text{Réel } [x(t) \cdot e^{j2\Pi f_0 t}]$$

$$e(t) = \rho(t) \, \text{Réel } [e^{j(2\Pi f_0 t + \varphi(t))}]$$

$$e(t) = \rho(t) \cos(2\Pi f_0 + \phi(t))$$

Posons $\Delta\phi(t) = \text{Arc cos } \rho(t)/2$.

Ainsi on obtient les signaux de modulation d'un premier émetteur 2 :

$$x_1(t) = e^{j\phi(t) + \Delta\phi(t)}$$

et le signal de modulation du second émetteur 2 :

$$x_2(t) = e^{j\phi(t) - \Delta\phi(t)}$$

Les signaux $x_1$ et $x_2$ sont émis par deux antennes 1 travaillant en polarisations croisées.

A la réception, à la sortie du dispositif de sommation 11 des figures 4 et 5 on obtient un signal

$$e'(t) = \text{Réel } [x_1(t) \cdot e^{j2\Pi f_0}] +$$
$$\text{Réel } [x_2(t) \cdot e^{j2\Pi f_0 t}]$$

$$e'(t) = \text{Réel } [[(x_1(t) + x_2(t)] \, e^{j2 f_0 t}]$$

$$e'(t) = \text{Réel } \left[ 2 \, \frac{e^{j\Delta\varphi(t)} - e^{-j\Delta\varphi(t)}}{2} \, e^{j\varphi(t)} \, e^{j2\Pi f_0 t} \right]$$

$$e'(t) = \text{Réel } [2 \cos \Delta\varphi(t) \, e^{j2\Pi f_0 t + \varphi(t)}]$$

Ainsi le signal reçu est égal au signal à transmettre.

Le choix d'un codage peut avantageusement minimiser la bande passante nécessaire des émetteurs 2.

Les signaux provenant de N sources de signal 8 sont multiplexés dans le temps et/ou transmis en parallèle.

Dans une variante de réalisation du dispositif selon la présente invention on utilise pour chaque émetteur une loi de modulation connue. Par exemple, on utilise des lois de modulation binaire. Avantageusement on utilise pour tous les émetteurs 2 la modulation MSK (Minimum Shift Keying). Dans d'autres exemples de réalisation on utilise les lois de modulation CPFSK (Continus Phase Frequency Shift Keying) ou FSK (Frequency Shift Keying).

Avantageusement le dispositif de transcodage 91 est connecté en parallèle à deux dispositifs de suréchantillonnage 92. Le dispositif de suréchantillonnage 92 effectue un suréchantillonnage du signal par exemple dans le rapport de 4 de 6 ou de 8.

Avantageusement le dispositif de suréchantillonnage 92 est connecté à un dispositif de lissage du signal 93. Le dispositif de lissage du signal entre deux données transmises permet de réduire les sauts du signal, et ainsi de réduire la bande passante nécessaire aux transmissions. Les lissages du signal dans le dispositif 93 présentent l'inconvénient de réduire les intervalles de temps dans lesquels l'information transmise est stable, ceci se traduit par une perte de signal au niveau de la réception.

Avantageusement, le dispositif de lissage est connecté à un dispositif 94 de mise sur porteuse en numérique du signal. Les sorties du dispositif de mise en numérique sur porteuse du signal 94 sont connectées aux émetteurs 2 (non représentés sur la figure 6).

Sur la figure 7, on peut voir une variante de réalisation du dispositif selon la présente invention comportant deux émetteurs 2 susceptibles d'émettre sur deux fréquences différentes f1 et f2. L'utilisation de deux fréquences différentes f1 et f2 permet d'utiliser les propriétés de battement entre fréquences comme par exemple le fait que les transitions par zéro sont effectuées de façon stationnaire aux instants fixes dépendants du rapport de fréquence f1/f2.

Les émetteurs 2 sont reliés par un dispositif de sommation 11. Le dispositif de sommation 11 est, par exemple, un anneau hybride. La sortie du dispositif de sommation 11 est reliée aux entrées de deux modulateurs de phase 30. Les deux modulateurs de phase 30 sont susceptibles de moduler, par exemple en bande latérale unique, le signal reçu, la modulation de phase est obtenue à partir d'un signal 31 reçu par exemple à partir d'un dispositif de traitement 9 (non représenté sur la figure 7).

Les signaux modulés en phase par le modulateur de phase 30 sont connectés soit directement soit par l'intermédiaire d'amplificateurs à deux antennes 1 susceptibles de travailler en polarisations croisées.

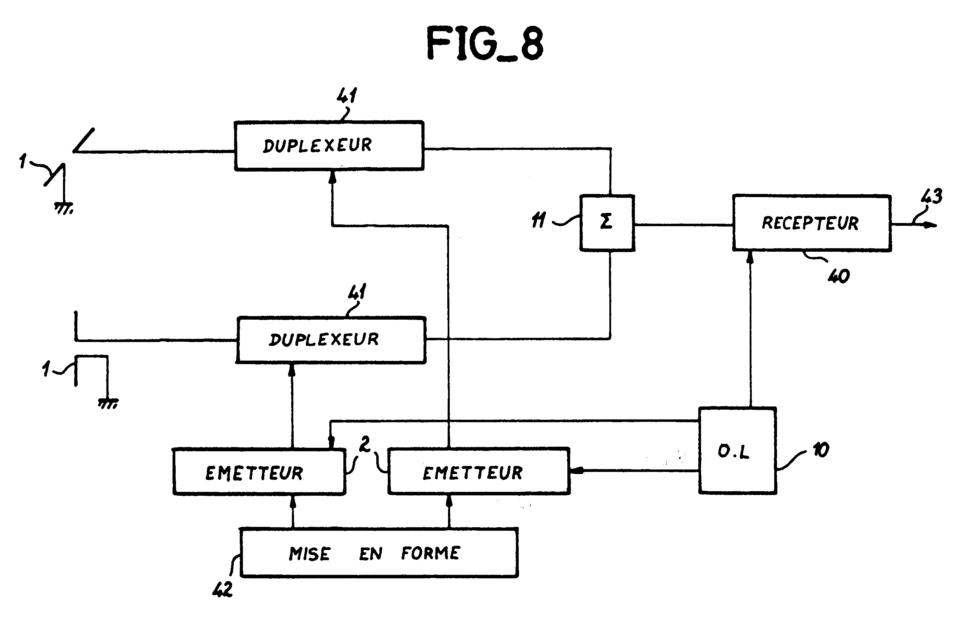

Sur la figure 8, on peut voir un dispositif radar selon la présente invention. Le dispositif radar comporte un dispositif de mise en forme des impulsions 42. Le dispositif de mise en forme d'impulsions est connecté à au moins deux émetteurs 2. D'autre part, les émetteurs 2 reçoivent les signaux provenant d'un oscillateur local 10.

Dans une variante de réalisation non illustrée du dispositif selon l'invention on utilise une pluralité d'oscillateurs locaux. Toutefois, il est impératif qu'aussi bien à l'émission qu'à la réception les signaux soient cohérents pour toute la chaîne de traitement d'information.

La sortie de chacun des émetteurs 2 est connectée à l'entrée d'un duplexeur 41. La sortie de chaque duplexeur 41 est connectée, d'une part à une antenne d'émission-réception 1 et, d'autre part, à une des entrées d'un dispositif de sommation 11. La sortie du dispositif de sommation 11 est reliée à l'entrée d'un récepteur 40. D'autre part, le récepteur 40 est connecté à l'oscillateur local 10.

Le circuit de mise en forme 42 permet un codage extrêmement élaboré des impulsions grâce à l'utilisation des deux antennes 1 travaillant dans des polarisations orthogonales. D'autre part, il est possible d'utiliser les rayonnements émis par le radar pour effectuer les transmissions des données.

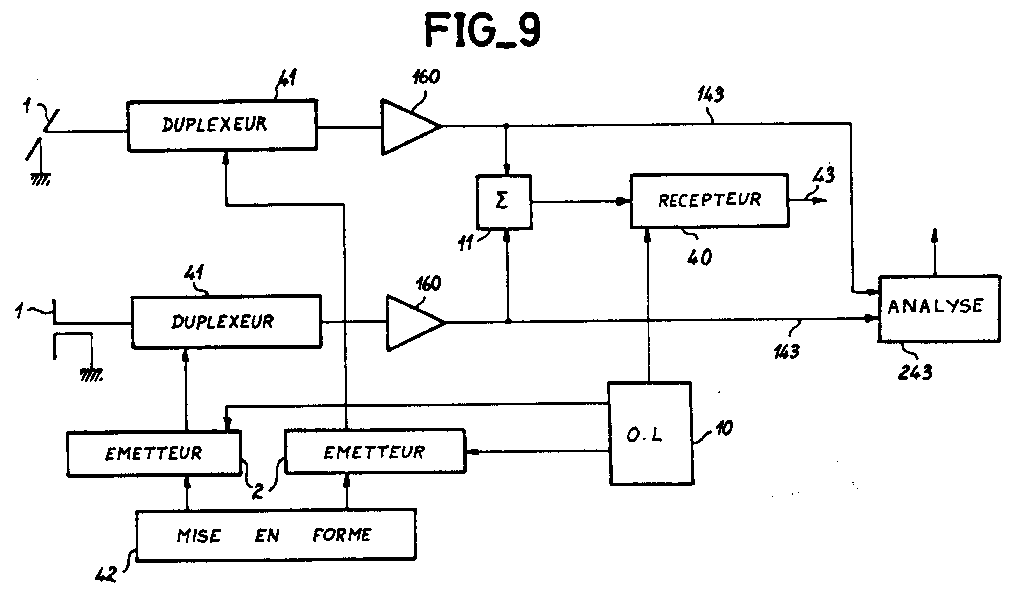

Sur la figure 9, on peut voir un radar particulièrement performant selon la présente invention. Le dispositif de la figure 9, les sorties du duplexeur 41 sont reliées aux entrées du dispositif de sommation 11 par l'intermédiaire d'amplificateurs 160. Ainsi, toute l'énergie captée par les antennes 1 à la réception a été amplifiée. Ainsi le rapport signal/bruit a été amélioré de 3 dB. Ce n'est que l'énergie amplifiée qui subit la sommation du dispositif de sommation 11 qui, dans ce cas réduit de 3 dB l'énergie que l'on lui fournit mais non pas le rapport signal/bruit.

Le signal sommé par le dispositif de sommation 11 est envoyé au récepteur 40. A la sortie du récepteur 40 nous disposons d'un signal 43 susceptible de traitement radar classique.

Dans une variante de réalisation du dispositif selon la présente invention nous disposons aussi des signaux captés par les deux antennes 1 dans la polarisation orthogonale. Les deux signaux 143 étant dans des polarisations orthogonales leur comparaison permet une analyse des signatures des cibles. En effet, les cibles comme par exemple les aéronefs présentent des dièdres entraînant la rotation de polarisation du rayonnement incident de l'analyse des niveaux des signaux reçus sur chacune des polarisations et de leur comparaison il est possible d'identifier un type de cible et donc de prendre des mesures les plus efficaces pour, par exemple sa destruction.

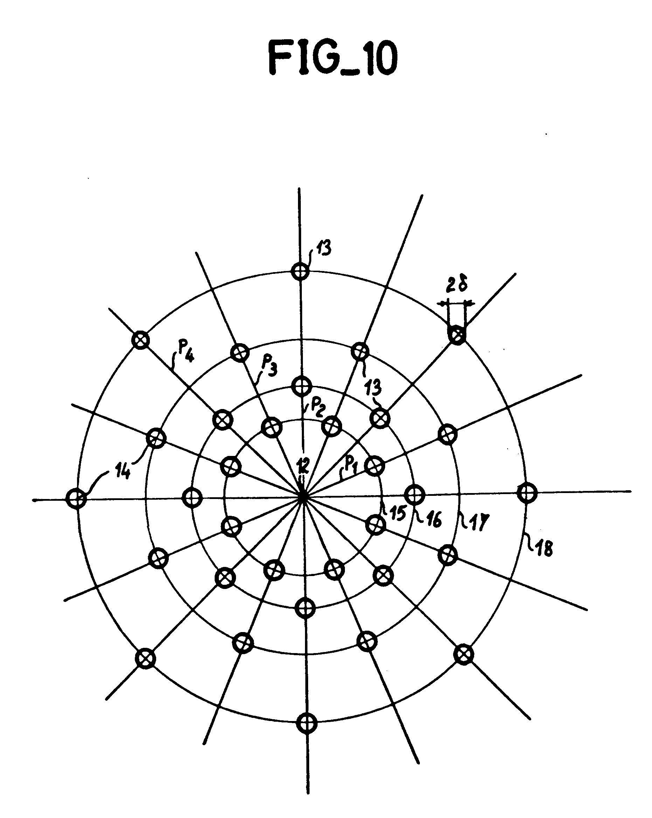

Sur les figures 10, 11 et 12, on peut voir trois exemples de codage possible du signal selon la valeur numérique que l'on veut pouvoir transmettre.

Sur la figure 10, on peut voir un exemple de répartition des valeurs numériques du signal dans le plan complexe obtenu avec deux émetteurs de même puissance. Le signal comporte 32 valeurs différentes ce qui correspond à une transmission numérique sur cinq bits. La valeur numérique correspondant à des disques 13 de diamètre égal à $2\delta$ répartis sur quatre cercles 15, 16, 17 et 18 de diamètre respectif $\rho1$, $\rho2$, $\rho3$ et $\rho4$. $\rho1$ est par exemple égal à $\sqrt{2}/2$, $\rho2$ = 1, $\rho3$ = $\sqrt{2}$ et $\rho4$ = 2, la puissance d'un émetteur étant normalisée à 1. Les points 14 sont répartis régulièrement sur chaque cercle.

Avantageusement, pour diminuer le risque d'erreur à la réception, on éloigne au maximum les disques 13. Ainsi, sur chaque cercle suivant les points 14 sont placés sur les bissectrices des points 14 du cercle précédent. Dans l'exemple illustré sur la figure 9 la discrimination de phase est égale à $\pi/8$, le rapport signal/bruit est compris entre 15 et 24 décibels.

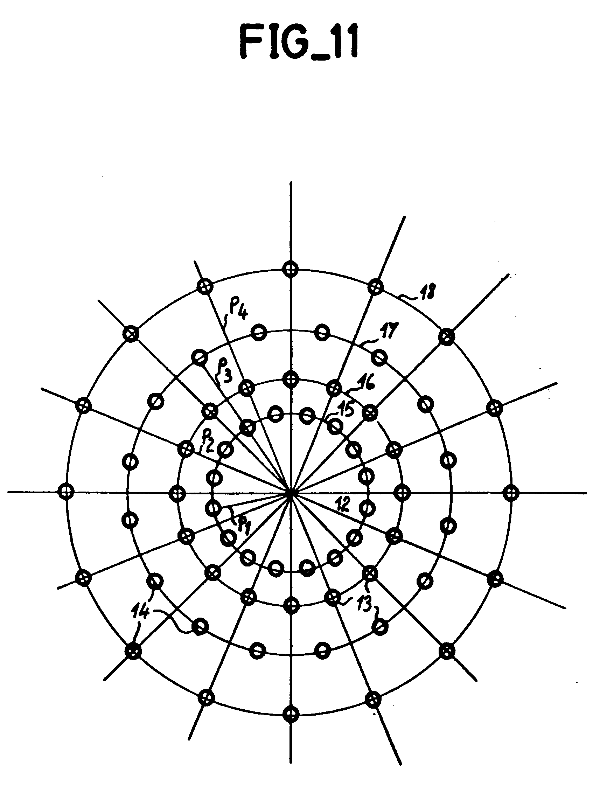

Sur la figure 11, on peut voir un exemple de répartition dans le plan complexe de valeurs numériques transmises sur six bits c'est-à-dire comportant 64 points 14 distincts. Les points 14 sont répartis sur quatre cercles référencés de 15 à 18 de diamètre respectif $\rho1$ = $\sqrt{2}/2$, $\rho2$ = 1, $\rho3$ = $\sqrt{2}$, $\rho4$ = 2, la puissance d'un émetteur 2 étant normalisée à 1. La précision de phase nécessaire est égale à $\pi/16$.

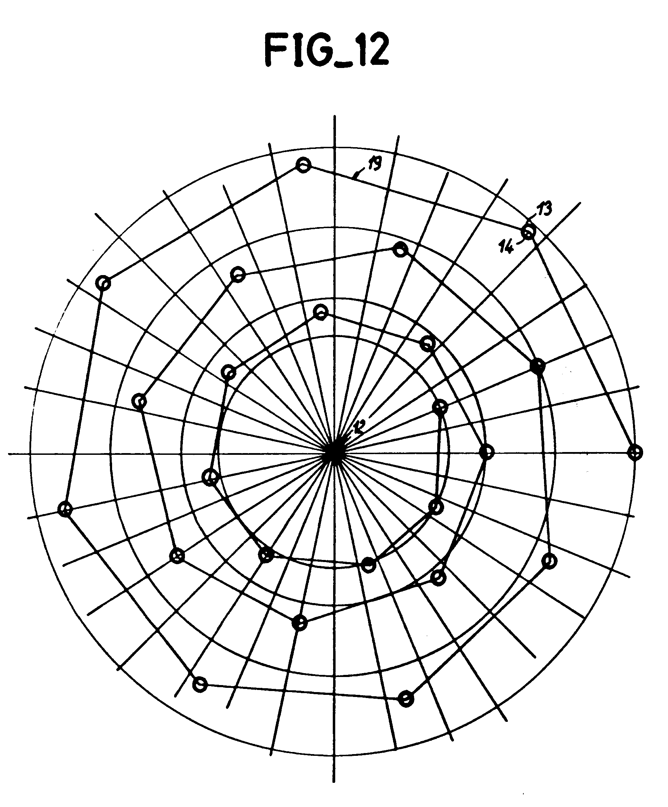

Sur la figure 12, on peut voir une répartition dans le plan complexe des diverses valeurs numériques à transmettre minimisant les risques de confusion. Les points 14 sont répartis sur une spirale de centre 12 comprise entre deux cercles correspondant à la puissance minimale nécessaire au rapport signal/bruit désiré et un cercle correspondant à la somme de puissance de tous les émetteurs utilisés.

Avantageusement, la spirale est une spirale logarithmique. Sur la figure 12 on a représenté 24 points 14 distincts correspondant à un rapport signal/bruit de 30 décibels. La spirale utilisée était approximée par une courbe 19 réalisée en reliant par des segments de droite les points 14 successifs. L'invention n'est pas limitée à la transmission des nombres représentés par des régions d'espace utilisant des coordonnées polaires. Il est par exemple possible, de transmettre sur une voie de transmission les chiffres de poids fort, sur l'autre canal de transmission les chiffres de poids faible ou d'utiliser une représentation cartésienne de l'espace utilisant deux axes.

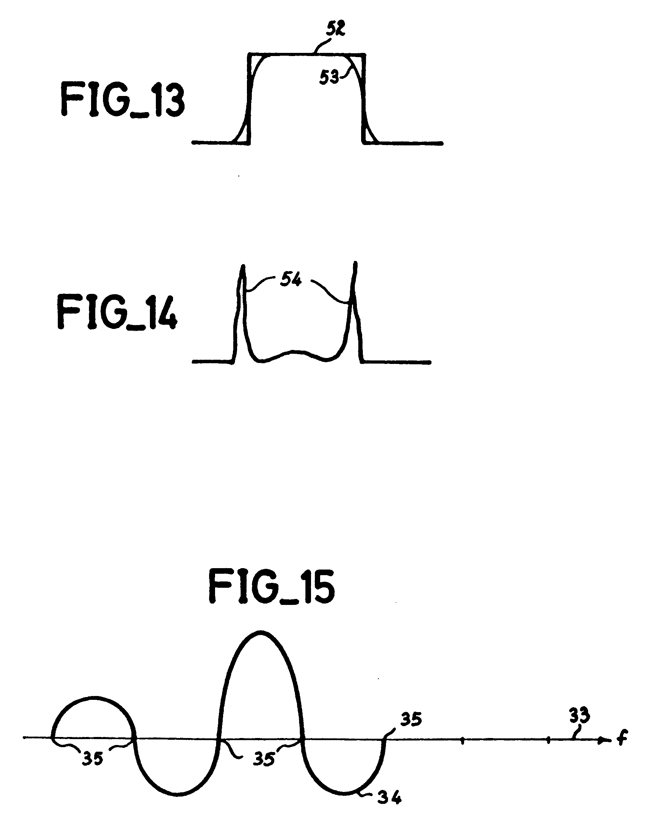

Sur la figure 13, on peut voir l'avantage procuré par le dispositif des figures 8 et 9. L'impulsion 52 normalement émise en radar est une impulsion rectangulaire nécessitant une très large bande passante, ou provoquant l'apparition de lobe secondaire fréquentiel. La modulation d'amplitude réalisée par le dispositif selon la présente invention permet d'éviter des transitions brusques.

Dans une variante de réalisation du dispositif selon la présente invention comportant deux émetteurs 2 seule l'énergie normalement dissipée par une charge au niveau du dispositif de sommation 11 est envoyée vers l'antenne présentant une polarisation orthogonale. Ceci permet d'une part de récupérer l'énergie qui normalement est perdue, et d'autre part d'avoir un écho de cible correspondant à une forme caractéristique du signal comportant deux pointes 54 illustrées sur la figure 14.

Dans les exemples illustrés on a utilisé deux polarisations rectilignes, par exemple la polarisation horizontale et la polarisation verticale. L'utilisation d'autres types de polarisaiton comme par exemple la polarisation circulaire ne sort pas du cadre de la présente invention. Par exemple, on utilise la polarisation circulaire gauche et la polarisation circulaire droite.

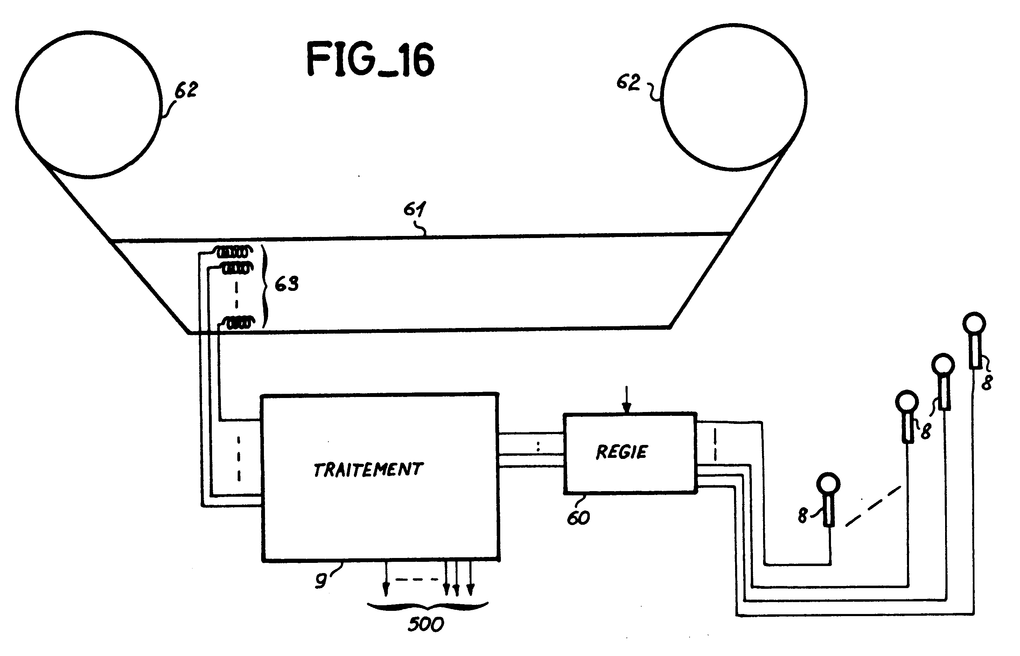

Sur la figure 16, on peut voir un enregistreur magnétique selon la présente invention. Le dispositif comporte au moins une source de signal 8. Dans l'exemple illustré sur la figure 16 les sources de signal 8 sont des microphones. Il est bien entendu que l'utilisation d'autre source de signal comme par exemple des caméras vidéo, des instruments de mesure ou des calculateurs ne sort pas du cadre de la présente invention. Les sources de signal sont reliées au dispositif de traitement 9. Le dispositif de traitement 9 est analogue au dispositif de traitement des figures 2, 3 ou 6. Le dispositif de traitement 9 est connecté à une pluralité de têtes magnétiques 63. Le nombre de têtes 63 dépend notamment de la largeur de la bande magnétique 61 utilisée. Sur une mini-cassette standard il est possible d'utiliser, par exemple, 2, 4 ou 8 têtes 63. Le nombre de voix du dispositif de traitement 9 est égal au nombre de pistes utilisées. Les têtes magnétiques 63 sont susceptibles d'être appliquées sur une bande magnétique 61 se déroulant par exemple entre deux bobines 62. Dans une variante de réalisation le dispositif selon la présente invention comporte une régie 60 connectée entre les sources de signal 8 et le dispositif de traitement 9. Cette régie permet d'effectuer des modifications du signal avant son enregistrement. Lors de l'enregistrement d'un signal le dispositif de traitement effectue une modulation de phase d'au moins deux têtes de lecture 63. Ainsi, le signal est enregistré sur une pluralité de pistes magnétiques en modulation de phase. A la lecture, le dispositif de traitement 9 reconstitue le ou les signaux 500 susceptibles d'être exploités. L'exploitation peut par exemple être une amplification suivie d'une audition par l'intermédiaire d'un haut parleur (non représenté sur la figure 16).

Il est possible qu'à la réception il existe une intermodulation de la polarisation verticale par la polarisation horizontale et vice versa.

Avantageusement, le dispositif selon la présente invention comporte un système de neutrodynage permettant de compenser l'intermodulation des polarisations croisées.

Pour compenser les distorsions de propagation on émet deux codes orthogonaux sur les antennes 1, par exemple un code a par l'antenne émettant en polarisation verticale et un code b par l'antenne émettant en polarisation horizontale. On veut, à la réception recevoir sur l'antenne polarisée verticalement a" un signal proportionnel à a et sur l'antenne polarisée horizontalement un signal b" proportionnel à b. En fait on reçoit un signal de la forme :

$$a' = \alpha a + \beta b$$
$$b' = \gamma a + \delta b \quad (1)$$

où $(\alpha, \beta, \gamma, \delta)$ définissent la matrice (inconnue) de propagation. Pour corriger ce défaut, on va introduire par exemple un octopôle opérant une transformation linéaire sur les signaux $a'$ et $b'$ de façon à retrouver des signaux proportionnels à a et b.

Cet octopôle est défini par deux paramètres K et $K'$ tels que :

$$a'' = a' + Kb'$$
$$b'' = b' + K'a' \quad (2)$$

avec la condition :

$$a'' = qa$$
$$b'' = q'b \quad (3)$$

Donc on tire de (2)

$$a' + Kb' = qa$$
$$b' + K'a' = q'b$$

Compte tenu de l'expression (1) de $a'$ et $b'$ cela donne les conditions suivantes portant sur les paramètres (K, $K'$) de l'octopôle :

$$\beta + K = 0$$

$\gamma + K' = 0$ Le problème est qu'on ne connaît pas la matrice de propagation $(\alpha, \beta, \gamma, \delta)$.

Pour déterminer la matrice (3) on émet par les deux antennes 1 deux codes orthogonaux et on mesure la covariance, c'est-à-dire le produit moyen $\overline{a'' \, b''^{*}}$ (x signifie la valeur moyenne de x et x* est le conjugué de x ). L'annulation de la covariance $\overline{a'' \, b''^{*}} = 0$ , a et b étant orthogonaux, donne :

$$\overline{(\alpha + K\gamma)(\gamma^{*} + K'^{*}\alpha^{*}) = 0}$$
$$\overline{(\beta + K\delta)(\delta^{*} + K'^{*}\beta^{*}) = 0}$$

Par suite :

$$\beta + K\delta = 0$$
$$\gamma + K'\alpha = 0 \quad (5)$$

C'est précisément les conditions (3) que nous cherchions. On trouve en outre une autre solution :

$$\alpha + K\gamma = 0$$
$$\delta + K'\beta = 0 \quad (6)$$

En ce cas c'est $b''$ qui est proportionnel à a et a" à b.
Il y a seulement permutation entre les sorties. Il suffit donc d'asservir les paramètres (K, $K'$) de l'octopôle à la condition d'annulation de la covariance des signaux de sortie pour retrouver les signaux cherchés.

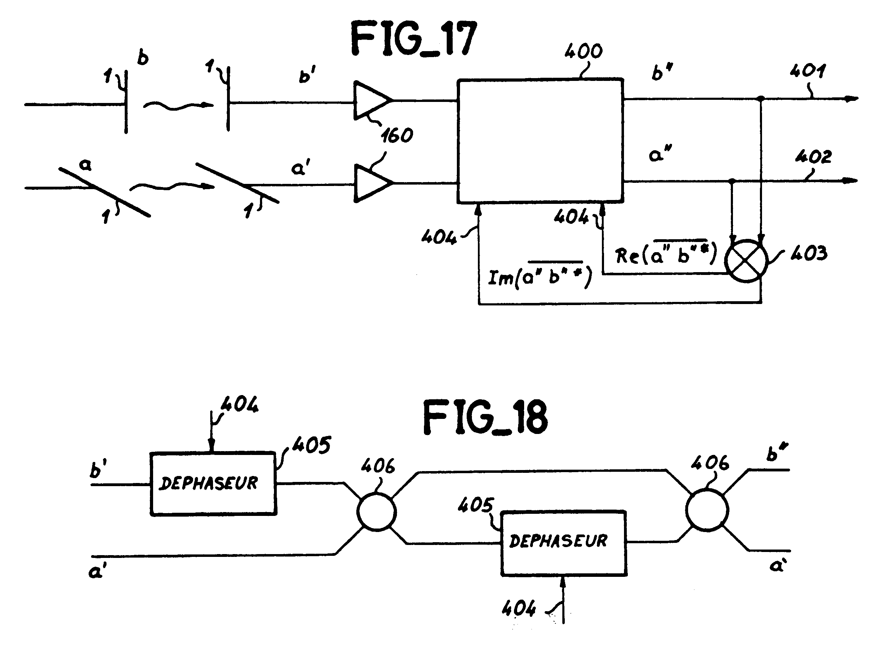

Sur la figure 17, on peut voir un exemple de réalisation d'un dispositif selon l'invention permettant de s'affranchir de l'intermodulation entre les deux polarisations.

Le dispositif de neutrodynage 400 est connecté aux antennes de réception 1, avantageusement par l'intermédiaire d'amplificateurs d'antenne 160. Les sorties 401 et 402 du dispositif de neutrodynage 400 sont connectées, d'une part au dispositif de traitement ultérieur, comme par exemple le dispositif de sommation 11, non représenté sur la figure 17, et d'autre part aux entrées d'un dispositif 403 de démodulation cohérente comportant un circuit intégrateur. Le dispositif 403 est relié à un oscillateur local non représenté. A la sortie du dispositif 403 sont présents les signaux 404 de commande du dispositif de neutrodynage 400.

Sur une première entrée de commande du dispositif de neutrodynage 400 on applique la partie réelle de $\overline{a'' b''^*}$ .

Sur une seconde entrée de commande du dispositif de neutrodynage 400 on applique la partie imaginaire de $\overline{a'' b''^*}$ .

Le neutrodynage peut être réalisé sur la porteuse, à la fréquence intermédiaire, après une première rédaction de fréquence ou après une seconde rédaction de fréquence. Dans ce dernier cas on utilisera avantageusement un filtre numérique.

Sur la figure 18, on peut voir un exemple de réalisation analogique du dispositif de neutrodynage 400 de la figure 17.

Une première ligne est reliée à une première entrée d'un coupleur 3 db 406 par l'intermédiaire d'un déphaseur 405. Le déphaseur 405 reçoit un signal de commande 404. Le coupleur 3 dB, est par exemple un anneau hybride 406.

Une seconde ligne est reliée à une seconde entrée de l'anneau hybride 406.

Une première sortie de l'anneau hybride 406 est reliée à une entrée d'un second anneau hybride 406.

Une seconde sortie de l'anneau hybride 406 est reliée à une seconde entrée du second anneau hybride 406 par l'intermédiaire d'un second déphaseur 405. Le second déphaseur 405 reçoit un signal de commande 404.

Sur une première sortie du second anneau hybride 406 est présent le signal b" proportionnel au signal b. Sur une seconde sortie du second anneau hybride 406 est présent le signal a″ proportionnel au signal a.

L'invention s'applique à la détection, transmission et au stockage d'information en utilisant la modulation d'amplitude, la modulation de phase ou la modulation d'amplitude-phase. Le dispositif selon la présente invention permet les transmissions analogiques. Toutefois, le dispositif selon la présente invention est particulièrement performant pour les transmissions et les stockages de données numériques.

L'invention permet la mise en oeuvre de tout émetteur de type connu. Toutefois, le dispositif et le procédé selon la présente invention permet de tirer profil de meilleur rendement ainsi que d'une très bonne linéarité de phase des amplificateurs travaillant en régime saturé, c'est-à-dire en classe C.

L'invention s'applique principalement à la transmission des données numériques utilisant des ondes électromagnétiques comme par exemple les faisceaux hertziens, aux émissions de télévision ainsi qu'aux émissions radiophoniques, à la détection par radar ou sonar.

**Revendications**

1. Procédé de transmission sur deux canaux de données, les données provenant d'au moins une source, étant envoyées en parallèle sur les deux canaux et étant modulées en phase (9), dans les deux canaux différents, selon deux modulations de phase indépendantes, les signaux ainsi modulés étant respectivement rayonnés par une première antenne (1) ayant une première polarisation, et par une deuxième antenne (1) ayant une polarisation différente, les signaux ainsi modulés étant reçus par des antennes (1) de polarisations correspondantes et caractérisé en ce que les signaux reçus sont additionnés vectoriellement ensemble (11), le signal résultant étant démodulé en amplitude et en phase (43).

2. Procédé selon la revendication 1, caractérisé par le fait que les antennes d'émission et de réception sont à polarisations rectilignes orthogonales.

3. Procédé selon la revendication 1, caractérisé par le fait que les antennes d'émission et de réception sont à polarisations circulaires croisées.

4. Procédé selon l'une des revendications précédentes, caractérisé par le fait que les deux porteuses ont des fréquences différentes (f1, f2).

5. Procédé selon la revendication 4, caractérisé par le fait que l'on effectue un battement entre les deux fréquences différentes (11).

6. Procédé selon l'une des revendications précédentes, caractérisé par le fait qu'à la réception on procède à un neutrodynage (400).

**7.** Application du procédé selon l'une des revendications précédentes à un radar, caractérisée par le fait que l'on compare les signaux reçus par les deux antennes de réception pour effectuer une analyse de signature de cibles.

**8.** Dispositif de transmission sur deux canaux de données, les données provenant d'au moins une source, et étant envoyées en parallèle sur les deux canaux, dispositif dont l'émetteur comporte deux antennes (1) à polarisations différentes et dont le ou les récepteurs comportent deux antennes (1) correspondantes à polarisations différentes, l'émetteur comportant un modulateur (9, 42) modulant les données (8) selon deux modulations de phase indépendantes, chacun de ces signaux modulés en phase étant envoyé à l'une des antennes, et caractérisé par le fait que le ou les récepteurs comportent un sommateur (11) relié aux deux antennes de réception, ce sommateur étant relié à un canal unique (43) de démodulation de phase et d'amplitude.

**9.** Dispositif selon la revendication 8, caractérisé par le fait que les antennes sont à polarisations rectilignes orthogonales.

**10.** Dispositif selon la revendication 8 ou 9, caractérisé par le fait que les antennes sont à polarisations circulaires croisées.

**11.** Dispositif selon la revendication 8, 9 ou 10, caractérisé par le fait que ledit dispositif émetteur est un dispositif d'émission d'ondes modulées par un signal acoustique.

**12.** Dispositif selon l'une des revendications 8 à 10, caractérisé par le fait que ledit dispositif émetteur est un émetteur de faisceaux hertziens de télécommunications.

**13.** Dispositif selon l'une des revendications 8 à 10, caractérisé par le fait que ledit dispositif émetteur est un émetteur de télévision.

**14.** Dispositif selon l'une des revendications 8 à 10, caractérisé par le fait que ledit dispositif est un radar.

**15.** Dispositif selon l'une des revendications 8 à 14, caractérisé par le fait que le dispositif modulateur contient, pour chaque voie d'émission (2) un dispositif de lissage (93) du signal supprimant les discontinuités du signal dues à la modulation.

**16.** Dispositif selon l'une des revendications 8 à 15, caractérisé par le fait que les deux antennes rayonnent des fréquences porteuses différentes.

**17.** Dispositif selon la revendication 11, caractérisé par le fait que le(s) récepteur(s) comporte (nt) des amplificateurs (160) d'antennes placés entre les antennes (1) et le dispositif de sommation (11).

**18.** Dispositif de réception selon l'une des revendications 8 à 17, caractérisé par le fait que le(s) récepteur-(s) comporte(nt) un dispositif de neutrodynage (400) permettant de réduire ou d'annuler l'intermodulation des signaux émis dans des polarisations différentes.

**Claims**

**1.** Method of transmitting on two data channels, the data originating from at least one source, being sent in parallel on the two channels and being phase modulated (9), in the two different channels, according to two independent phase modulations, the signals thus modulated being radiated respectively by a first antenna (1) having a first polarization, and by a second antenna (1) having a different polarization, the signals thus modulated being received by antennae (1) with corresponding polarizations, and characterized in that the signals received are vectorially added together (11), the resultant signal being demodulated in amplitude and in phase (43).

**2.** Method according to Claim 1, characterized in that the transmitting and receiving antennae have orthogonal linear polarizations.

**3.** Method according to Claim 1, characterized in that the transmitting and receiving antennae have crossed circular polarizations.

**4.** Method according to one of the preceding claims, characterized in that the two carriers have different frequencies (f1, f2).

**5.** Method according to Claim 4, characterized in that beating is carried out between the two different frequencies (11).

**6.** Method according to one of the preceding claims, characterized in that neutrodyning (400) is carried out on reception.

**7.** Application of the method according to one of the preceding claims to a radar, characterized in that the signals received by the two receiving antennae are compared in order to carry out target signature analysis.

**8.** Device for transmitting on two data channels, the data originating from at least one source, and being sent in parallel on the two channels, a device in which the transmitter includes two antennae (1) with different polarizations and in which the receiver or receivers include two corresponding antennae (1) with different polarizations, the transmitter including a modulator (9, 42) modulating the data (8) according to two independent phase modulations, each of these phase-modulated signals being sent to one of the antennae, and characterized in that the receiver or receivers include a summer (11) linked to the two receiving antennae, this summer being linked to a single channel (43) for phase and amplitude demodulation.

**9.** Device according to Claim 8, characterized in that the antennae have orthogonal linear polarizations.

**10.** Device according to Claim 8 or 9, characterized in that the antennae have crossed circular polarizations.

**11.** Device according to Claims 8, 9 or 10, characterized in that the said transmitter device is a device for transmitting waves modulated by an acoustic signal.

**12.** Device according to any one of Claims 8 to 10, characterized in that the said transmitter device is a transmitter of telecommunications radio beams.

**13.** Device according to one of Claims 8 to 10, characterized in that the said transmitter device is a television transmitter.

**14.** Device according to one of Claims 8 to 10, characterized in that the said device is a radar.

**15.** Device according to one of Claims 8 to 14, characterized in that the modulator device contains, for each transmission channel (2), a device (93) for smoothing the signal, suppressing the discontinuities in the signal which are due to the modulation.

**16.** Device according to one of Claims 8 to 15, characterized in that the two antennae radiate different carrier frequencies.

**17.** Device according to Claim 11, characterized in that the receiver(s) include(s) antenna amplifiers (160) placed between the antennae (1) and the summing device (11).

**18.** Receiving device according to one of Claims 8 to 17, characterized in that the receiver(s) include(s) a neutrodyning device (400) making it possible to reduce or cancel out the intermodulation of the signals transmitted in different polarizations.

10

**Patentansprüche**

1. Verfahren zur Datenübertragung über zwei Kanäle, wobei die Daten von mindestens einer Quelle stammen und parallel auf die beiden Kanäle gegeben und in ihrer Phase in den beiden getrennten Kanälen gemäß zwei voneinander unabhängigen Phasenmodulationen moduliert werden, worauf die so modulierten Signale von einer ersten Antenne (1) mit einer ersten Modulation und von einer zweiten Antenne (1) mit einer davon unterschiedlichen Modulation abgestrahlt werden und dann von Antennen (1) entsprechender Polarisationen empfangen werden, dadurch gekennzeichnet, daß die empfangenen Signale vektoriell summiert werden (11) und das resultierende Signal nach Amplitude und Phase demoduliert wird (43).

2. Verfahren nach Anspruch 1, dadurch gekennzeichnet, daß die Sendeantennen und Empfangsantennen aufeinander senkrecht stehende geradlinige Polarisationen besitzen.

3. Verfahren nach Anspruch 1, dadurch gekennzeichnet, daß die Sende- und Empfangsantennen gekreuzte Zirkularpolarisationen besitzen.

4. Verfahren nach einem der vorhergehenden Ansprüche, dadurch gekennzeichnet, daß die beiden Träger unterschiedliche Frequenzen (f1, f2) besitzen.

5. Verfahren nach Anspruch 4, dadurch gekennzeichnet, daß zwischen den beiden unterschiedlichen Frequenzen eine Schwebung durchgeführt wird (11).

6. Verfahren nach einem der vorhergehenden Ansprüche, dadurch gekennzeichnet, daß man beim Empfang eine Neutralisierung durchführt (400).

7. Anwendung des Verfahrens nach einem der vorhergehenden Ansprüche auf ein Radargerät, dadurch gekennzeichnet, daß man die von den beiden Empfangsantennen empfangenen Signale vergleicht, um eine Analyse der zielspezifischen Signalform durchzuführen.

8. Datenübertragungsvorrichtung auf zwei Kanälen, wobei die Daten von mindestens einer Quelle stammen und parallel auf den beiden Kanälen ausgesandt werden und wobei der Sender der Vorrichtung zwei Antennen (1) mit unterschiedlichen Polarisationen besitzt, während der oder die Empfänger zwei entsprechende Antennen (1) unterschiedlicher Polarisationen aufweisen, wobei der Sender einen Modulator (9, 42) aufweist, der die Daten (8) gemäß zwei voneinander unabhängigen Phasenmodulationen moduliert, worauf jedes der phasenmodulierten Signale auf einer der Antennen ausgesandt wird, dadurch gekennzeichnet, daß der oder die Empfänger ein Summierglied (11) enthalten, das an die beiden Empfangsantennen angeschlossen ist und auf einen gemeinsamen Kanal (43) zur Demodulation nach Phase und Amplitude führt.

9. Vorrichtung nach Anspruch 8, dadurch gekennzeichnet, daß die Antennen geradlinige und aufeinander senkrecht stehende Polarisationen besitzen.

10. Vorrichtung nach Anspruch 8 oder 9, dadurch gekennzeichnet, daß die Antennen gekreuzte Zirkularpolarisationen besitzen.

11. Vorrichtung nach Anspruch 8, 9 oder 10, dadurch gekennzeichnet, daß die Sendevorrichtung von einem akustischen Signal modulierte Wellen aussendet.

12. Vorrichtung nach einem der Ansprüche 8 bis 10, dadurch gekennzeichnet, daß die Sendevorrichtung nachrichtentechnische Richtfunkwellen aussendet.

13. Vorrichtung nach einem der Ansprüche 8 bis 10, dadurch gekennzeichnet, daß die Sendevorrichtung ein Fernsehsender ist.

14. Vorrichtung nach einem der Ansprüche 8 bis 10, dadurch gekennzeichnet, daß die Vorrichtung ein Radargerät ist.

**15.** Vorrichtung nach einem der Ansprüche 8 bis 14, dadurch gekennzeichnet, daß die Modulationsvorrichtung für jeden Sendekanal (2) eine Glättungsvorrichtung (93) für das Signal enthält, die Signalsprünge aufgrund der Modulation unterdrückt.

**16.** Vorrichtung nach einem der Ansprüche 8 bis 15, dadurch gekennzeichnet, daß die beiden Antennen unterschiedliche Trägerfrequenzen abstrahlen.

**17.** Vorrichtung nach Anspruch 11, dadurch gekennzeichnet, daß der oder die Empfänger Antennenverstärker (160) enthalten, die zwischen den Antennen (1) und der Summiervorrichtung (11) liegen.

**18.** Empfangsvorrichtung nach einem der Ansprüche 8 bis 17, dadurch gekennzeichnet, daß der oder die Empfänger eine Neutralisierungsvorrichtung(400) aufweisen, mit der die Intermodulation der mit unterschiedlichen Polarisationen ausgesandten Signale verringert oder beseitigt werden kann.

# FIG_1

# FIG_2

FIG_3

# FIG_4

# FIG_5

# FIG_6

# FIG_7

EP 0 279 997 B1

# FIG_8

EP 0 279 997 B1

# FIG_9

EP 0 279 997 B1

# FIG_10

# FIG_11

# FIG_12

FIG_13

FIG_14

FIG_15

FIG_16

# FIG_17

$Im(\overline{a'' b''{}^{*}})$  $Re(\overline{a'' b''{}^{*}})$

# FIG_18

DEPHASEUR

DEPHASEUR

EP 0 279 997 B1